# FASCICULE DE BREVET EUROPEEN

(11) **EP 1 064 528 B1**
(45) Date de publication et mention de la délivrance du brevet: **02.07.2003**
(21) Numéro de dépôt: 99932523.6
(22) Date de dépôt: 11.02.1999
(51) Int. Cl.: G01M 1/32

(54) **DISPOSITIF POUR L'EQUILIBRAGE D'UN ELEMENT TOURNANT DE MACHINE EN COURS DE ROTATION**
VORRICHTUNG ZUR AUSWUCHTUNG EINES DREHENDEN ELEMENTES EINER MASCHINE WÄHREND DER ROTATION
DEVICE FOR BALANCING A MACHINE ROTARY ELEMENT DURING ITS ROTATION

(30) Priorité: 13.02.1998 FR 9801731; 28.07.1998 FR 9809601; 19.01.1999 FR 9900489
(43) Date de publication de la demande: 03.01.2001
(73) Titulaire: Messaoudi, Ali, 78400 Chatou (FR)
(72) Inventeur: Messaoudi, Ali, 78400 Chatou (FR)
(74) Mandataire: Verdier, Louis
(86) Numéro de dépôt international: FR9900308
(87) Numéro de publication internationale: WO99041579

(56) Documents cités:
- DE-B- 1 216 801
- GB-A- 2 141 232
- US-A- 3 983 035

## Description

La présente invention concerne un dispositif permettant d'équilibrer automatiquement et en cours de rotation un élément tournant de machine soumis à un balourd tel qu'un rotor, un tambour ou une roue par exemple.

Pour résoudre ce problème, la technique actuelle consiste généralement à procéder à l'équilibrage des éléments tournants de machines à l'arrêt de ces dits éléments tournants par adjonction d'une masselotte diamétralement opposée au balourd ou par extraction de matière du côté du balourd, jusqu'à l'obtention de l'équilibre recherché.

Une autre technique consiste, dans certains cas d'application, à contrôler la vitesse de rotation de l'élément tournant pour limiter la gêne du balourd comme dans le cas de certains lave-linge par exemple, mais sans supprimer le balourd.

Si la première technique d'équilibrage est satisfaisante lorsque le balourd est invariable par sa masse et par sa direction sur l'élément tournant de machine, son application est difficilement envisageable dans le cas d'un système où le balourd est variable soit en cours de rotation par sa masse et/ou par sa direction sur l'élément tournant de machine, soit après chaque mise en route de la machine. Des moyens sont connus des documents : GB-A-2 141 232, US-A-3 983 035, DE-A-1 216 801.

La présente invention a pour objet la suppression du balourd, même lorsque ce balourd est variable par sa masse et/ou par son orientation sur le dit élément tournant de machine en cours de rotation ou après chaque mise en route de la machine. Le dispositif selon l'invention et défini dans la revendication indépendante de dispositif 1.

D'une façon plus précise, le dispositif comprend des réservoirs implantés sur l'élément tournant à équilibrer, recevant un fluide tel que de l'eau par exemple par l'intermédiaire d'un circuit hydraulique dont la masse de ce fluide injecté dans le ou les réservoirs opposés au balourd, fait office de contrepoids d'équilibrage. Ce dispositif comporte en effet d'une part, selon une première caractéristique, une suspension élastique répartie autour des extrémités d'une cage de support de l'élément tournant au niveau des paliers de telle sorte qu'en cours de rotation, l'axe du dit élément tournant soumis au balourd, décrit un cercle dont le centre passe par l'axe du dit élément tournant lorsqu'il est en équilibre en cours de rotation, des butées de positionnement axial de la cage par rapport au support de machine et solidaires de ce dit support de machine, au moins trois réservoirs implantés à égale position angulaire l'un de l'autre sur le dit élément tournant, éloignés de l'axe de rotation et munis chacun d'au moins un bec de remplissage/vidange situé à une de leurs extrémités et issu de leur partie la plus basse lorsque ces réservoirs sont en position haute, d'au moins un reniflard issu de la partie la plus haute de ces réservoirs lorsqu'ils sont en position haute, et les dits becs de remplissage/vidange et reniflards sont courbés vers le centre de rotation de l'élément tournant, un corps de support solidaire de l'arbre du dit élément tournant par une extrémité, un joint tournant d'amenée du fluide d'équilibrage solidaire du dit corps de support par sa face avant et dans son axe de rotation, une tuyauterie d'amenée du fluide d'équilibrage connectée au joint tournant et une canalisation de refoulement pour chaque vanne ou électrovanne, traversant l'arbre de l'élément tournant au niveau du palier pour alimenter le réservoir du dit élément tournant, qui lui est dédié.

Les modes particuliers de réalisation sont définis dans les revendications dépendantes 2-9 :
- le corps de support comporte d'une part, une vanne pour chaque réservoir de l'élément tournant, et les tiges de commande de ces vannes, sortent par la face avant du dit corps de support à égale position angulaire l'une par rapport à l'autre, décalées chacune en avant du sens de rotation d'un angle α par rapport à la position du réservoir leur correspondant sur l'élément tournant, le déplacement de ces dites tiges de commande par rapport au dit corps de support est parallèle à l'axe de rotation de l'élément tournant et leurs extrémités évoluent sur un même cercle dont le centre est situé sur l'axe de rotation de l'élément tournant lorsqu'il est en équilibre, et d'autre part, il comporte une butée circulaire solidaire du support de machine dont l'axe est positionné dans l'alignement de l'axe de l'arbre de l'élément tournant lorsqu'il est en équilibre ou à l'arrêt, et cette butée présente dans sa partie centrale un large trou de passage de la tuyauterie d'amenée du fluide d'équilibrage ainsi qu'un bossage également circulaire de même axe que la butée, situé sur la face en vis-à-vis des extrémités de tiges de commande, de telle sorte que la ou les extrémités des dites tiges de commande opposées au balourd, prennent appui sur ce bossage pour solliciter l'ouverture de la ou des vannes correspondant à ces extrémités de tiges de commande pour le remplissage du ou des réservoirs opposés au balourd, dès que l'élément tournant se trouve en déséquilibre.
- le corps de support comporte d'une part, une vanne pour chaque réservoir de l'élément tournant qui sont en nombre pair, et les tiges de commande de ces vannes situées à égale position angulaire l'une par rapport à l'autre sur le dit corps de support et décalées chacune en avant du sens de rotation d'un angle α par rapport à la position du réservoir leur correspondant sur l'élément tournant, ont un axe de déplacement par rapport au dit corps de support, perpendiculaire à l'axe de rotation de l'élément tournant et les extrémités de ces dites tiges de commande de vannes, évoluent sur un même cercle dont le centre est situé sur l'axe de rotation de l'élément tournant lorsqu'il est en équilibre, et d'autre part, il comporte une butée cylindrique solidaire du support de machine, dont l'axe est positionné dans l'alignement de l'axe de l'arbre du dit élément tournant lorsqu'il est en équilibre ou à l'arrêt, de telle sorte qu'aucune extrémité des dites tiges de commande de vannes qui évoluent à l'intérieur de cette butée cylindrique, ne prend appui sur cette butée, mais qu'une ou plusieurs extrémités des dites tiges de commande de vannes situées du côté du balourd, prennent appui sur cette butée pour solliciter l'ouverture de la ou des vannes correspondantes à ces dites extrémités de tiges pour le remplissage du ou des réservoirs en opposition au balourd, dès que l'élément tournant se trouve en déséquilibre.
- le corps de support comporte d'une part, une électrovanne pour chaque réservoir de l'élément tournant, et les contacts ressorts de commande de ces électrovannes reliés chacun à une borne de l'électrovanne leur correspondant par un fil électrique, sont situées sur la face avant du dit corps de support à égale position angulaire l'un par rapport à l'autre, décalés chacun en avant du sens de rotation d'un angle α par rapport à la position du réservoir leur correspondant sur l'élément tournant, l'axe de déplacement de ces dits contacts ressorts par rapport au dit corps de support est parallèle à l'axe de rotation de l'élément tournant et leurs extrémités évoluent sur un même cercle dont le centre est situé sur l'axe de rotation de l'élément tournant lorsqu'il est en équilibre, une alimentation électrique unipolaire tournante centrée sur l'axe du dit corps de support à sa partie arrière et reliée à l'autre borne de chacune des électrovannes par des fils électriques, et d'autre part, il comporte une butée circulaire plane en matériau non conducteur d'électricité solidaire du support de machine et dont l'axe de cette butée est positionné dans l'alignement de l'axe de l'arbre du dit élément tournant lorsqu'il est en équilibre ou à l'arrêt, cette butée présente en son centre un large trou de passage de la tuyauterie d'amenée du fluide d'équilibrage et une surface circulaire conductrice d'électricité centrée sur cette butée en vis à vis des contacts ressort de commande des électrovannes et connectée à l'autre pôle d'alimentation électrique par l'intermédiaire de la borne, et le diamètre extérieur de cette couche conductrice d'électricité est légèrement inférieur à celui du plus petit cercle décrit par les dits contacts ressort en cours de rotation lorsque l'élément tournant est en équilibre, de telle sorte que la ou les extrémités des dits contacts ressort opposés au balourd, touchent cette couche conductrice d'électricité pour commander l'ouverture de la ou des électrovannes leur correspondante, pour le remplissage du ou des réservoirs opposés au balourd, dès que l'élément tournant se trouve en déséquilibre.
- le corps de support comporte d'une part, une électrovannes pour chaque réservoir de l'élément tournant qui sont en nombre pair, et les contacts ressorts de commande de ces électrovannes, reliés chacun à une borne de l'électrovanne leur correspondant par un fil électrique, sont situées à égale position angulaire l'un par rapport à l'autre sur le dit corps de support et décalées chacun en avant du sens de rotation d'un angle α par rapport à la position du réservoir leur correspondant sur l'élément tournant, et ont un axe de déplacement par rapport au dit corps de support, perpendiculaire à l'axe de rotation de l'élément tournant et les extrémités de ces dits contacts ressorts, évoluent sur un même cercle dont le centre est situé sur l'axe de rotation de l'élément tournant lorsqu'il est en équilibre, une alimentation électrique unipolaire tournante centrée sur l'axe du dit corps de support à sa partie arrière et reliée à l'autre borne de chacune des électrovannes par des fils électriques, et d'autre part, il comporte une butée cylindrique non conductrice d'électricité solidaire du support de machine présentant sur sa périphérie interne une couche conductrice d'électricité isolée du corps de machine et connectée à l'autre pôle d'alimentation électrique par l'intermédiaire d'une borne, et dont l'axe de cette butée est positionné dans l'alignement de l'axe de l'élément tournant lorsqu'il est en équilibre ou à l'arrêt, de telle sorte qu'aucune extrémité des dits contacts ressort de commande des électrovannes qui évoluent à l'intérieur de cette butée cylindrique, ne prend appui sur la couche conductrice d'électricité, mais qu'une ou plusieurs extrémités des dits contacts ressort situées du côté du balourd, prennent appui sur cette couche conductrice d'électricité pour solliciter l'ouverture de la ou des électrovannes correspondantes à ces dits contacts ressort, pour le remplissage du ou des réservoirs en opposition au balourd, dès que l'élément tournant se trouve en déséquilibre.
- le corps de support comporte autant d'électrovannes et de masselottes qu'il y a de réservoirs sur l'élément tournant, ces masselottes identiques entre elles, sont implantées à égale position angulaire l'une par rapport à l'autre et décalées chacune en avant du sens de rotation d'un angle α par rapport à la position de chaque réservoir leur correspondant sur l'élément tournant et sont en contact sur des capteurs de force de telle sorte que leurs points d'appui sur ces capteurs évoluent sur un même cercle dont le centre est situé sur l'axe de rotation de l'élément tournant lorsqu'il est en équilibre, et que ces capteurs mesurent les forces centrifuges générées par chacune des masselottes en cours de rotation qui sont égales entre elles lorsque l'élément tournant est en équilibre, une alimentation électrique tournante centrée sur l'axe du dit corps de support à sa partie arrière, un circuit électronique comportant notamment un relais de commande pour chaque électrovanne et un microprocesseur, et ce circuit électronique est tel que d'une part, il compare en permanence et durant toute la séquence d'équilibrage, les mesures transmises par ces capteurs en cours de rotation, et si ces mesures sont toutes égales entre elles, la séquence d'équilibrage prend fin car l'élément tournant se trouve en équilibre, mais si ces mesures sont toutes ou partiellement différentes, il sélectionne la ou les mesures les plus élevées et égales entre elles comme mesure de référence à cet instant, et sollicite tous les relais de commande de remplissage des réservoirs correspondants aux capteurs ayant des mesures inférieures à cette mesure de référence transmise par le ou les capteurs dont seuls le remplissage du réservoir leur correspondant n'est pas sollicité, et d'autre part, de commander l'arrêt du remplissage d'un réservoir dès que la mesure transmise par le capteur correspondant à ce réservoir devient égale à la dite mesure de référence à cet instant donné, la valeur de la dite mesure de référence peut être différente de celle du départ et notamment inférieure et le ou les capteurs correspondants à cette mesure de référence, peuvent être différents de celui ou de ceux de départ si la direction du balourd a changé en cours de rotation, l'arrêt du remplissage du dernier réservoir a lieu lorsque toutes les mesures transmises par tous les capteurs de force sont égales entre elles, ce qui correspond à un état d'équilibre du dit élément tournant.
- les masselottes sont maintenues en légère pression sur leur capteur de force par l'intermédiaire d'un ressort et ces masselottes sont noyées dans un milieu visqueux de telle sorte que leur poids soit neutralisé et permettre la mise à zéro par le circuit électronique, des mesures transmises par les capteurs de force au début de la séquence d'équilibrage et avant le démarrage de l'élément tournant a équilibrer.
- le dispositif comporte un système de commande des électrovannes sans contact mécanique tel que des cellules photoélectriques, des rayons infrarouges, des ultrasons ou des rayons dits laser par exemple, dont une partie mobile est solidaire du corps de support et une partie fixe est solidaire du support de machine.
- le dispositif comporte d'une part, un corps de support muni d'une électrovanne pour chaque réservoir de l'élément tournant, d'un pôle d'alimentation électrique tournante pour chaque électrovanne, d'un pôle d'alimentation électrique tournante commun à toutes les électrovannes, d'une couronne de repérage des réservoirs coopérant avec un capteur fixe de position angulaire de ces réservoirs solidaire de la cage et les repères de cette couronne sont décalés en avant du sens de rotation d'un angle α par rapport au réservoir leur correspondant, et d'autre part un palier muni d'un capteur de force de telle sorte qu'en cours de rotation ces deux capteurs transmettent leurs mesures à un calculateur qui détermine par recpupage la direction et le sens du balourd par rapport aux réservoirs ainsi que la force générée par ce balourd, commande (dans le cas d'un dispositif à trois réservoirs) le remplissage des deux réservoirs opposés au balourd si le balourd est localisé exactement au niveau d'un réservoirs et commande l'arrêt du remplissage des deux réservoirs lorsque la valeur de la force générée par le balourd devient nulle, commande (dans le cas d'un dispositif à trois réservoirs) le remplissage des deux réservoirs les plus opposés au balourd lorsque le balourd est localisé entre deux réservoirs mais plus proche de l'un des réservoirs que l'autre et commande en premier lieu l'arrêt du remplissage du réservoir le moins opposé au balourd lorsque le balourd se trouve centré entre les deux réservoirs puis commande l'arrêt du remplissage du deuxième réservoir qui se trouve alors directement opposé au balourd, lorsque la force générée par le balourd devient nulle, commande (dans le cas d'un dispositif à trois réservoirs) le remplissage du réservoir directement opposé au balourd lorsque le balourd est localisé exactement entre deux réservoirs et commande l'arrêt du remplissage de ce réservoir lorsque la force générée par le balourd devient nulle ( ce qui correspond à la deuxième phase du cas précédent).

Les dessins annexés illustrent l'invention :
La figure 1 représente schématiquement, une vue d'ensemble d'une machine équipée du dispositif selon l'invention.
La figure 2 représente schématiquement, une coupe de la machine équipée du dispositif selon l'invention.
La figure 3 représente en coupe, l'implantation des réservoirs sur l'élément tournant.
La figure 4 représente en coupe, la suspension élastique de la cage de l'élément tournant sur le support de machine.
La figure 5 représente schématiquement en coupe, le mécanisme de détection du balourd, de répartition et de dosage du fluide d'équilibrage du dispositif dans le ou les réservoirs en opposition au balourd, en position d'équilibre de l'élément tournant.
La figure 6 représente en coupe, la butée et la position des tiges de commande de vannes lorsque le système est équilibré.
La figure 7 représente schématiquement en coupe, le mécanisme de détection du balourd, de répartition et de dosage du fluide d'équilibrage du dispositif dans le ou les réservoirs en opposition au balourd, en position de déséquilibre de l'élément tournant.
La figure 8 représente en coupe la butée et la position des tiges de commande de vannes lorsque le système est en déséquilibre.
La figure 9 représente, en cours de rotation lorsque l'élément tournant est soumis à un cas de balourd, la position des extrémités de tiges de commande des vannes par rapport aux réservoirs matérialisée par l'angle ∝ et la représentation graphique des efforts qui ont pour origine ce décalage.(Même plan de coupe que CC).
La figure 10 représente schématiquement en coupe, le mécanisme de détection du balourd, de répartition et de dosage du fluide d'équilibrage du dispositif dans le ou les réservoirs en opposition au balourd en position d'équilibre de l'élément tournant, équipé de vannes dont les tiges de commande sont positionnée perpendiculairement à l'axe de rotation. Dans ce cas de figure, le nombre de vannes (ou électrovannes) est pair et chaque vanne (ou électrovanne) alimente le réservoir qui lui est opposé.
La figure 11 représente la butée cylindrique et la position des tiges de commande de vannes par rapport à cette butée en position d'équilibre de l'élément tournant.
La figure 12 représente schématiquement en coupe, le mécanisme de détection du balourd, de répartition et de dosage du fluide d'équilibrage du dispositif dans le ou les réservoirs en opposition au balourd en position d'équilibre de l'élément tournant, équipé d'électrovannes.
La figure 13 représente en coupe, la butée équipé d'une couche conductrice d'électricité à sa partie centrale et la position des contacts ressorts par rapport à cette couche conductrice d'électricité en position d'équilibre de l'élément tournant.
La figure 14 représente schématiquement le dispositif muni d'un capteur de force au niveau du palier associé à un capteur de position angulaire des réservoir et la représentation graphique du balourd par rapport aux réservoirs servant de base de données au calculateur pour la commande des électrovannes appropriées lorsque le balourd maximum est localisé au niveau d'un des réservoirs.
La figure 15 représente schématiquement le dispositif muni d'un capteur de force au niveau du palier associé à un capteur de position angulaire des réservoir et la représentation graphique du balourd par rapport aux réservoirs servant de base de données au calculateur pour la commande des électrovannes appropriées lorsque le balourd maximum est localisé entre deux réservoirs mais plus proche de l'un des deux réservoirs que l'autre (A1≠A2).
La figure 16 représente schématiquement le dispositif muni d'un. capteur de force au niveau du palier associé à un capteur de position angulaire des réservoir et la représentation graphique du balourd par rapport aux réservoirs servant de base de données au calculateur pour la commande de l'électrovanne appropriée lorsque le balourd maximum est localisé exactement entre deux réservoirs (A1=A2).

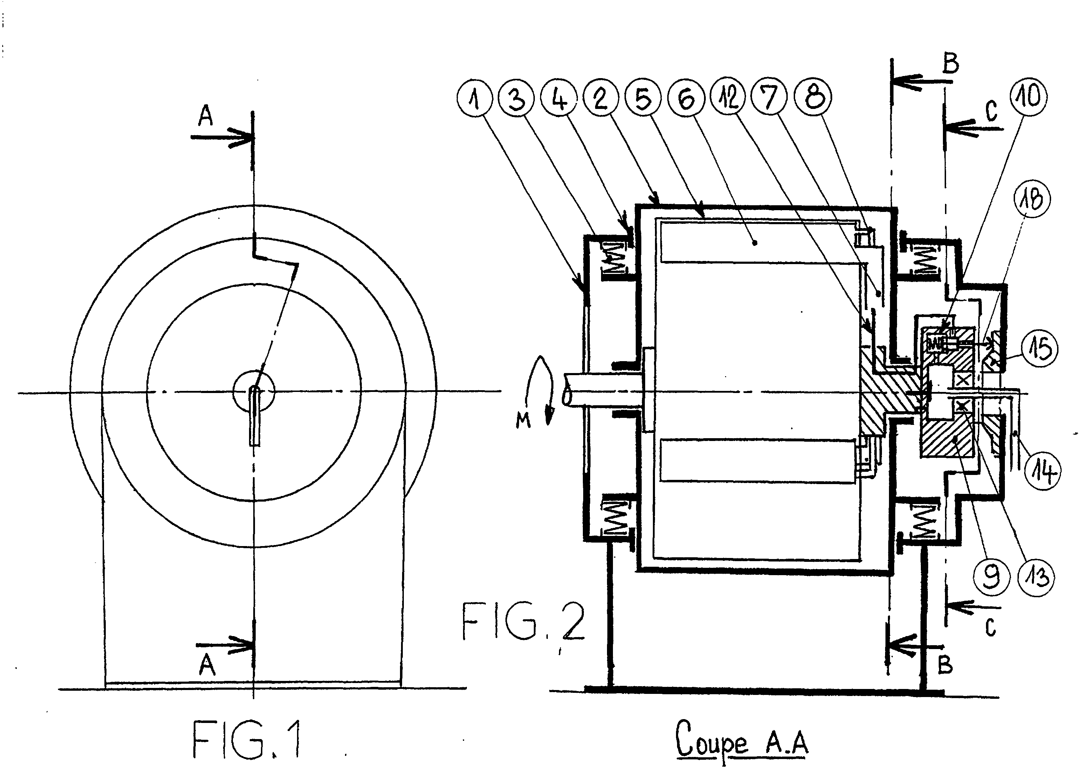

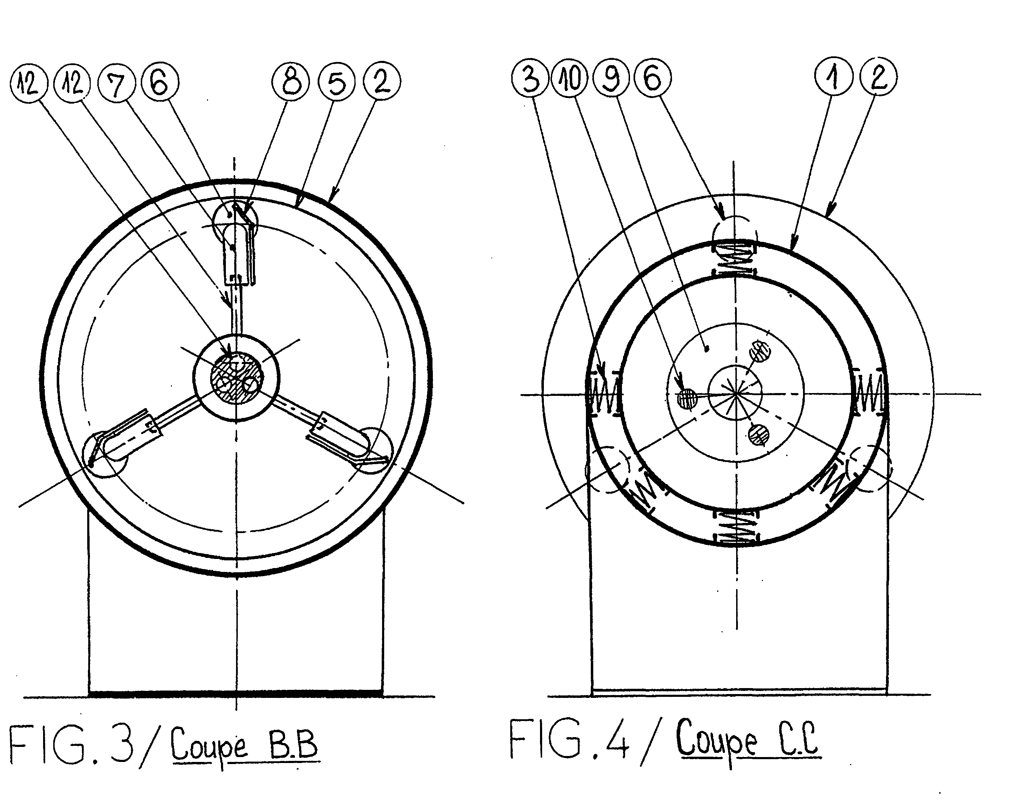

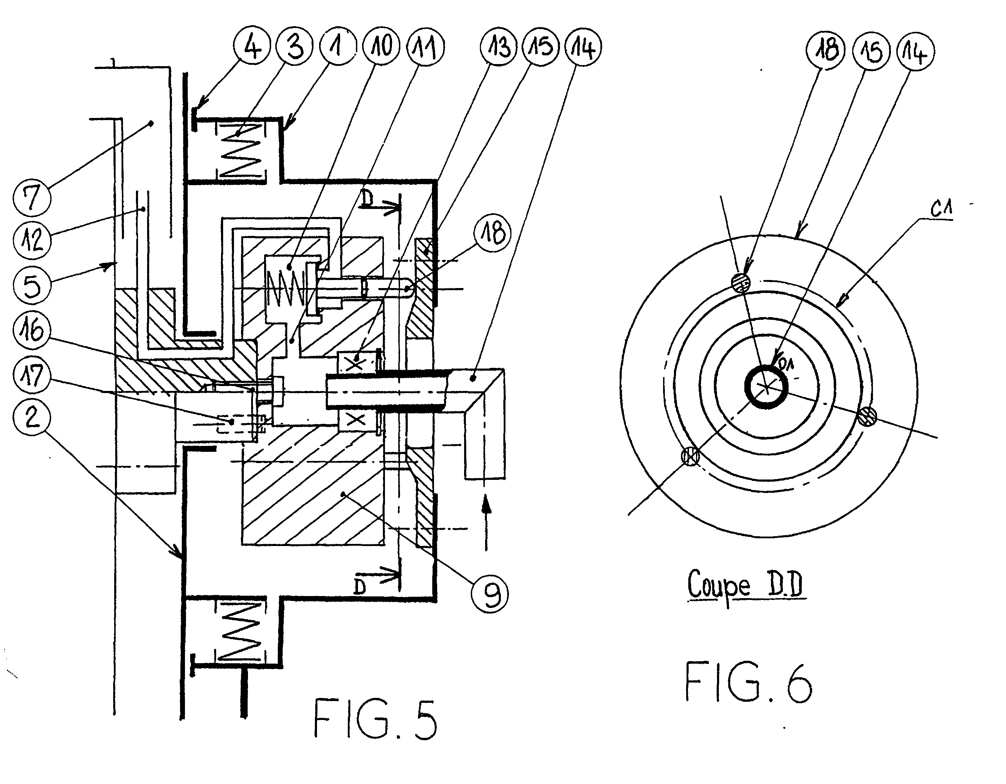

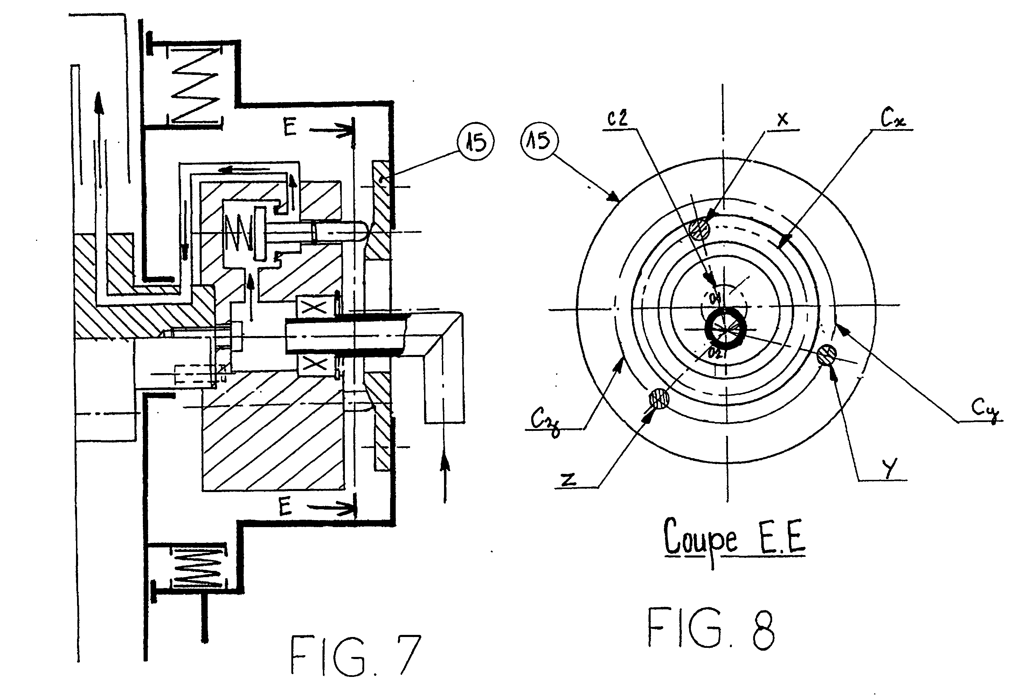

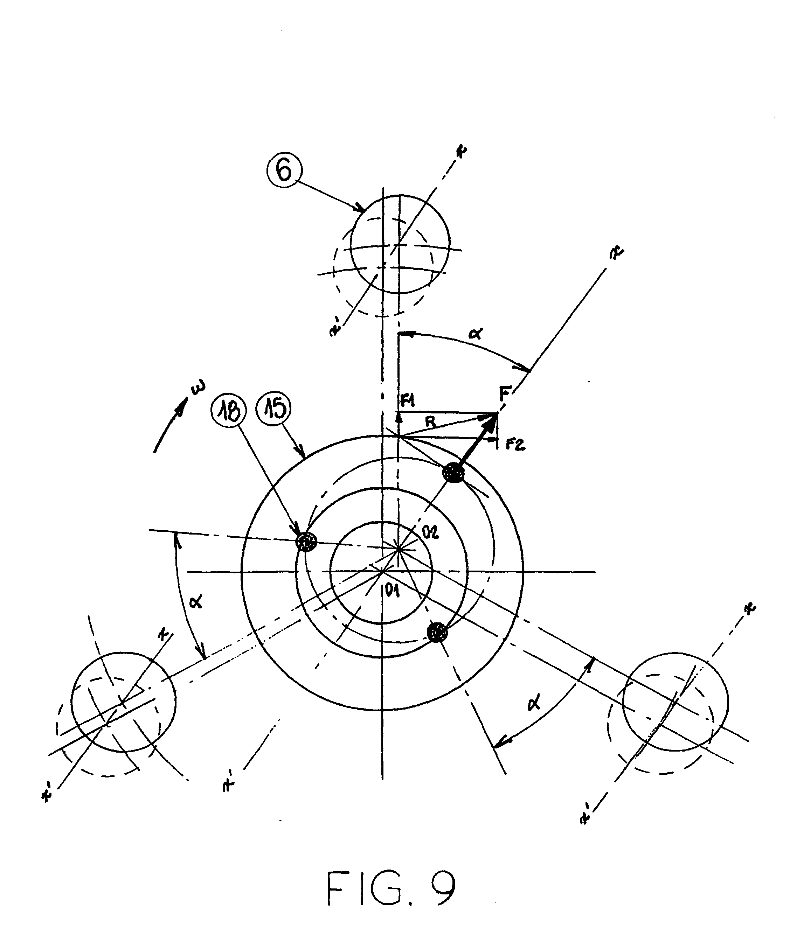

En référence à ces dessins, le dispositif comporte d'une part, une suspension à ressorts (3) constituant la fixation de la cage (2) du tambour (5) sur le support de machine (1) et des butées latérales (4) de positionnement axial de la cage (2) par rapport à ce support de machine. Les ressorts de cette suspension sont répartis à chaque extrémité de la cage (2) au niveau de ses paliers comme illustré par les figures 2 et 4, d'une façon telle qu'en cours de rotation, l'axe 02 du tambour (5) soumis à un balourd, tend à décrire un cercle C2 de centre O1 situé sur l'axe de la butée (15) comme illustré par la figure 8. Le dispositif comporte également trois réservoirs (6) solidaires du tambour (5) à sa périphérie et à 120° l'un de l'autre. Chaque réservoir est muni d'une part d'un large bec (7) courbé vers l'axe de rotation et situé à la partie la plus basse du réservoir lorsque celui-ci est en position haute pour sa vidange complète à l'arrêt de la machine et d'autre part un second bec (8) de plus petit diamètre faisant office de reniflard, pour faciliter cette vidange par un appel d'air, également courbé vers l'axe de rotation et situé à la partie supérieure du réservoir lorsque celui-ci est en position haute. Le tambour (5) doit effectuer quelques rotations lentes pour vidanger tous les réservoirs qui doivent êtres vides de préférence avant chaque démarrage de la machine. L'une des extrémités de l'arbre du tambour (5) reçoit le mouvement moteur (M), tandis qu'à l'autre extrémité, un corps de support (9) est solidaire de cet arbre par la vis (16) et la clavette (17) et muni de trois vannes (10) à fermeture au repos situées à 120° l'une de l'autre et décalées en avant du sens de rotation ω d'un angle ∝ par rapport à l'axe d'implantation des réservoirs (6) pour compenser le décalage en avant du balourd représenté sur la figure 9 par la force F en projection orthogonale sur l'axe xx' de la résultante R du balourd réel F1 et de l'effort du couple moteur F2 du tambour (5). La valeur de cet angle ∝ sera choisie en fonction d'une valeur moyenne du balourd constatée au cas d'application concerné et la vitesse de rotation minimum acquise sera celle pour laquelle le fluide contenu dans les réservoirs en cours de rotation ne coule pas par les becs de remplissages/vidange (7) sous l'effet de sa force d'inertie centrifuge. Les tiges (18) de commande de vannes (10) sortent par la face avant du corps de support (9) parallèlement à leur axe de rotation et leurs extrémités sont situées dans un même plan perpendiculaire à leur axes de rotation. Le corps de support (9) comporte aussi un joint tournant (13) à sa face avant, connecté à une tuyauterie d'amenée d'eau (14), une cavité interne de laquelle part une canalisation (11) d'alimentation pour chaque vanne, une canalisation (12) de refoulement traversant l'arbre du tambour (5) au niveau du palier pour arriver jusqu'à l'entrée du bec de remplissage et de vidange (7) de chaque réservoir et d'autre part une partie fixe constituée d'une butée (15) circulaire solidaire du support de machine (1) et dont l'axe est aligné sur l'axe du tambour (5) lorsqu'il est en rotation et en équilibre ou à l'arrêt. Cette butée présente à sa partie centrale un large trou permettant le passage de la tuyauterie d'amenée d'eau (14) de telle sorte que cette tuyauterie ne touche pas la butée en cours de rotation du tambour lorsqu'il est soumis à un balourd, et présente également à sa partie centrale un bossage circulaire dont le grand diamètre est légèrement inférieur au diamètre du cercle décrit par l'extrémité (18) des tiges de commande des vannes (10). Lorsque le tambour est en rotation et en équilibre, aucune extrémité de tige de commande de vanne qui décrivent un cercle C1 de centre O1 n'est en contact avec le bossage de la butée (15) et aucune vanne n'est donc sollicitée comme illustré par la figure 6. Si au contraire, en cours de rotation du tambour (5) il y à un balourd comme illustré par l'exemple des figures 7 et 8, l'axe 02 du tambour décrit un cercle C2 de centre ol par lequel passe l'axe de la butée (15) et l'extrémité de tige de commande de vanne X décrit un cercle Cx de centre 01, l'extrémité de tige de commande de vanne Y décrit un cercle Cy de centre O1 et l'extrémité de tige de commande Z décrit un cercle Cz de centre O1. Dans ce cas de figure particulier, les cercles Cy et Cz sont identiques. L'extrémité de la tige de commande de vanne X opposée au balourd, prend seule appui sur le bossage de la butée (15) en cours de rotation et sollicite la vanne qui alimente en eau le réservoir également opposé au balourd jusqu'à ce que la masse de l'eau contenue dans le réservoir équilibre le tambour (5). A ce moment précis l'extrémité de la tige de commande de vanne X n'est plus en appui sur le bossage de la butée (15) et par conséquent aucune vanne n'est plus sollicité comme dans le cas de la figure 6. De même, si la direction du balourd l'exige, deux extrémités de tiges de commande de vannes peuvent prendre appui sur le bossage de la butée sur un même rayon comme illustré sur la figure 9 ou sur des rayons différents. Chacune des vannes cessera d'alimenter le réservoir qui lui est approprié lorsque les extrémités des tiges de commande des vannes cesseront de prendre appui sur le bossage de la butée (15) pour se trouver en dernier lieu dans le cas de la figure 6. A l'arrêt de la machine les réservoirs se vidangent par gravitation lorsqu'ils arrivent en position haute au cours d'un cycle de rotation lent de quelques tours avant le démarrage.

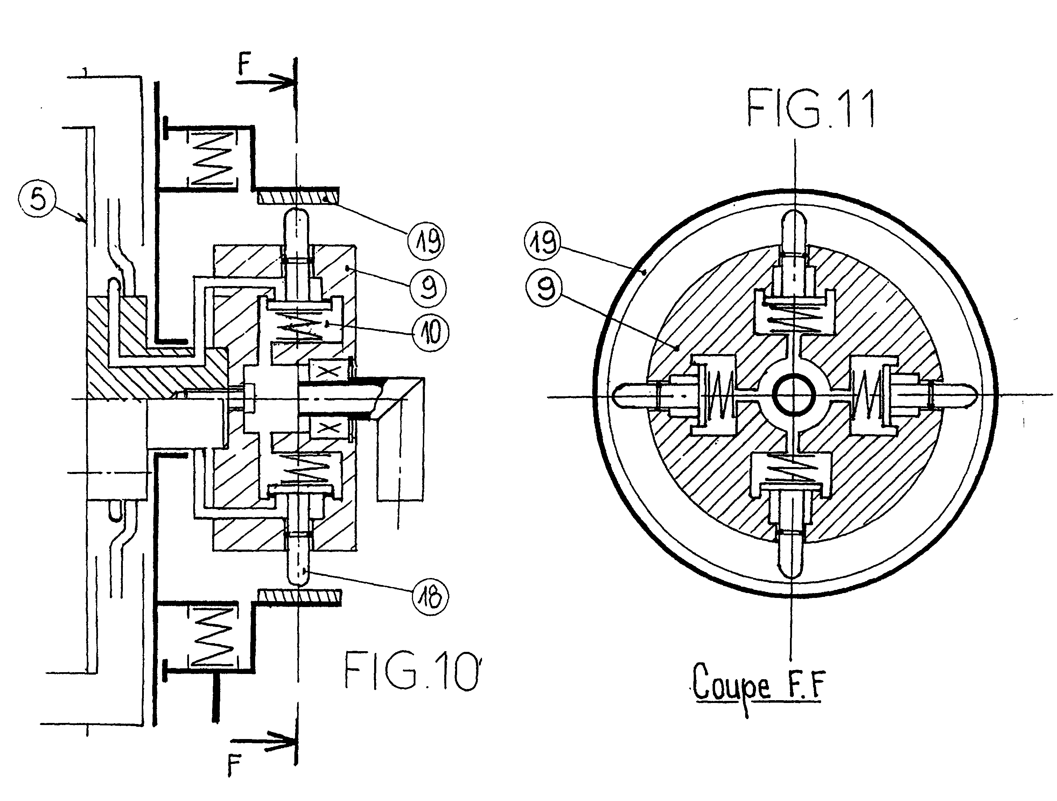

Dans la forme de réalisation selon les figures 10 et 11, les tiges (18) de commande des vannes (10) en nombre pair, sont perpendiculaires à l'axe de rotation du tambour (5). En absence de balourd sur le tambour (5), aucune extrémité de tige (18) de commande de vanne, qui évoluent en rotation à l'intérieur d'une butée (19) en forme de couronne et à fleur de celle-ci, ne prend appui sur cette butée. Si au contraire il y à présence de balourd en cours de rotation, une ou deux extrémités de tiges (18) de commande de vannes de même sens que le balourd, prennent appui sur la butée (19) et sollicitent les vannes correspondantes qui alimentent en fluide d'équilibrage le ou les réservoirs en opposition au balourd, jusqu'à ce que l'équilibre recherché soit atteint et qu'aucune extrémité de tige (18) de commande de vanne ne touche la butée (19).

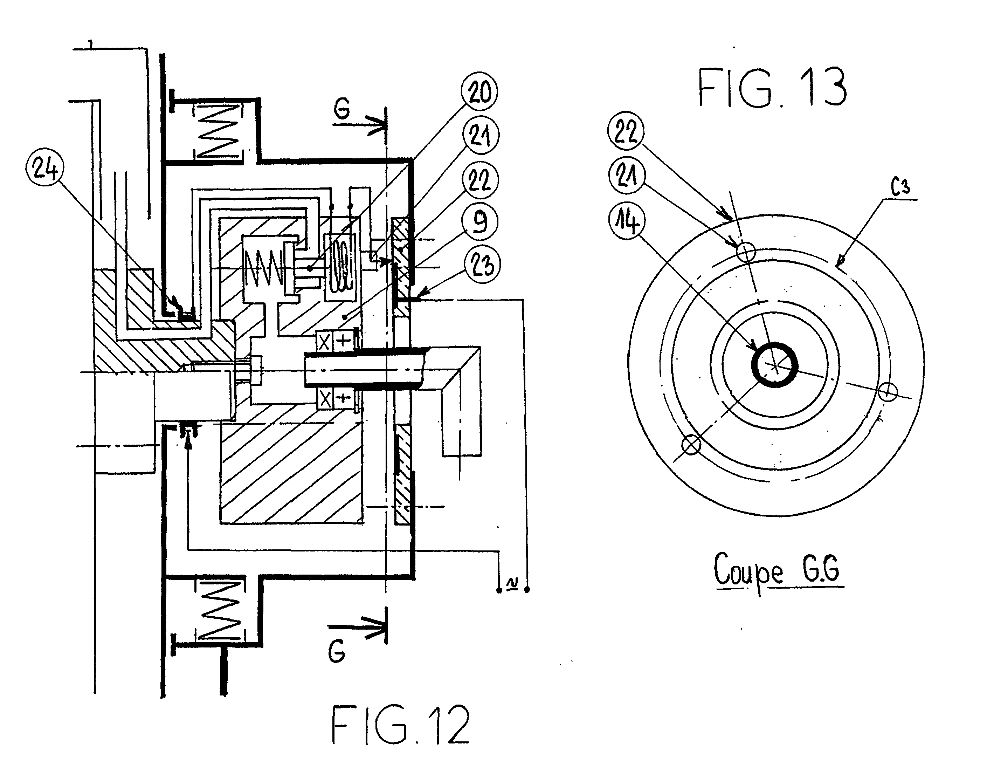

Dans une autre forme de réalisation selon les figures 12 et 13, le corps de support (9) comporte des électrovannes (20) dont le principe de fonctionnement reste identique aux cas des vannes à commande mécanique. En absence de balourd, les contacts ressorts (21) connectés par un fil électrique à une borne de l'électrovanne, dont les extrémités évoluent sur un cercle concentrique et légèrement supérieur à la périphérie d'une couche circulaire conductrice d'électricité solidaire de la butée (22) et connectée à un pôle d'alimentation électrique par la borne (23). La butée (22) est en matériau non conducteur d'électricité et solidaire du support de machine (1). Aucune des électrovannes (20), connectées par leur deuxième borne à une alimentation unipolaire tournante (24) n'est excitée. Si au contraire il y à présence de balourd, un ou deux contacts ressort (21) en opposition au balourd touchent la couche conductrice d'électricité de la butée (22), et excitent les électrovannes correspondantes qui alimentent en fluide d'équilibrage le ou les réservoirs en opposition au balourd, jusqu'à ce que l'équilibre recherché soit atteint.

Selon une autre variante non illustrée, le corps de support (5) est muni de contacts ressort en nombre pair situés à sa périphérie et connectés chacun par un fil électrique à une borne de l'électrovanne leur correspondante, de telle sorte qu'ils évoluent sur un même cercle, lorsque l'élément tournant (5) est en équilibre, à l'intérieur et à fleur d'une couche conductrice d'électricité en forme de couronne connectée par une borne à un pôle d'alimentation électrique, solidaire d'une butée non conductrice d'électricité et fixée sur le support de machine (1). L'autre borne des électrovannes est connectée par l'intermédiaire de fils électriques à une alimentation unipolaire tournante située à la partie arrière du corps de support (9). Dès que l'élément tournant se trouve en déséquilibre, un ou deux contacts ressort, prennent appui sur la couche conductrice d'électricité et commandent les électrovannes de remplissage du ou des réservoirs situés à l'opposé du balourd, jusqu'à ce que l'élément tournant s'équilibre et les contacts ressort cessent de toucher la couche conductrice d'électricité.

Dans une autre forme de réalisation non illustrée, le corps de support (5) est muni de trois masselottes identiques de forme cylindrique par exemple et ayant une masse d'environ 20 grammes chacune. Chaque masselotte est positionnée sur un capteur de force à égale distance du centre de rotation lorsque l'élément tournant est en équilibre, de manière à pouvoir mesurer la force centrifuge de chacune de ces masselottes en cours de rotation qui sont égales entre elles lorsque l'élément tournant est en équilibre. Les masselottes sont positionnées à 120° l'une de l'autre et décalées chacune en avant du sens de rotation d'un angle α par rapport à chacun des trois réservoirs de l'élément tournant (5). Le corps de support (5) comporte également un circuit électronique noyé dans la résine pour protéger les composants des différentes nuisances. Ce circuit électronique comprend notamment trois relais de commande des électrovannes et un microprocesseur programmable pour la gestion des données transmises par les capteurs de force sous forme de courants électriques, proportionnels à la force centrifuge à laquelle chaque capteur est soumis. La fonction de ce circuit électronique est d'une part, de comparer en permanence et durant toute la séquence d'équilibrage, les mesures transmises par les capteurs de force, de définir la plus élevée d'entre elles à chaque instant de la phase d'équilibrage pour servir de valeur de référence puis, par l'intermédiaire des relais de commande des électrovannes, ordonner le remplissage des réservoirs situés du côté de tous les capteurs ayant transmis des mesures plus faibles par rapport à cette valeur de référence de l'instant donné, qui doit en principe être la même que celle du début si la direction du balourd n'a pas changée, et d'autre part, d'arrêter le remplissage des réservoirs sélectionnés dès que le courant transmis par le capteur de force leur correspondant, devient égal au courant le plus élevé de référence de cet instant. Le remplissage du dernier réservoir, s'arrête lorsque le courant transmis par le capteur de force lui correspondant devient égal aux deux autres qui lui étaient plus élevés et égaux entre eux, c'est à dire lorsque les trois masselottes évoluent en rotation sur un même cercle et génèrent des forces centrifuges égales, ce qui correspond à l'équilibre de l'élément tournant (5).

Selon d'autres variantes également non illustrées, la commande des électrovannes peut s'opérer par l'intermédiaire d'un système sans frottement tel que des cellules photoélectriques, des rayons infrarouges ou des rayons dits laser par exemple dont une partie mobile est solidaire du corps de support (9), et l'autre partie fixe est solidaire du support de machine (1). Ces moyens de commande des électrovannes permettent de supprimer le bruit dû aux frottement des tiges de vannes ou des contacts ressorts sur les butées, de supprimer l'usure des pièces en frottement et d'obtenir un équilibrage plus précis et plus stable dans le temps, qu'un dispositif entièrement mécanique ne peut assurer en raison du jeu qui peut apparaître avec l'usure des pièces en frottement entre le bossage et les tiges de commande des vannes, entre les contacts ressorts et la couche conductrice d'électricité dans le cas des électrovannes.

Dans le cas d'un élément tournant trop long, chacune des deux extrémités de l'arbre de ce dit élément tournant, peuvent êtres équipées d'un dispositif d'équilibrage avec chacun son système de réservoirs indépendants.

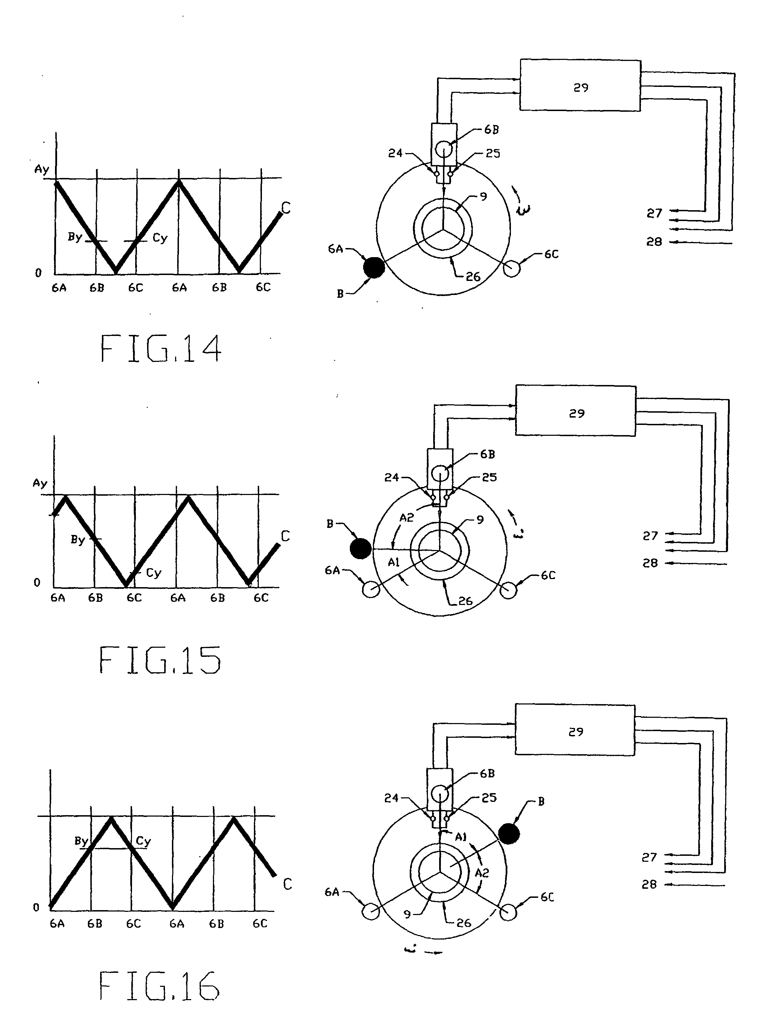

Dans la forme de réalisation illustrée par les figures 14, 15 et 16, le corps de support comporte trois électrovannes dont chacune est reliée séparément à une alimentation électrique tournante, une couronne (26) de repérage des trois réservoirs (6A,6B,6C) coopérant avec un capteur de position angulaire (25) associé à un capteur de force (24) situé sur le palier d'arbre et pouvant mesurer l'effort radial généré par le balourd. Pour les mêmes raisons que précédemment, chaque repère de la couronne (26) est décalé en avant du sens de rotation d'un angle α par rapport au réservoir lui correspondant. Les mesures de ces capteurs sont transmises à un calculateur (29) qui détermine par recoupage comme indiqué sur les graphiques représentant l'évolution du balourd par la courbe C par rapport à la position angulaire des réservoirs, la position du balourd maximum.

Dans le cas de la figure 14, le balourd maximum Ay est situé au niveau du réservoir 6A comme le montre le graphique. C'est donc les électrovannes correspondantes aux réservoirs 6B et 6C qui seront sollicitées jusqu'à ce que Ay=By=Cy=0 (au Δy près correspondant à la tolérance d'équilibrage admissible). Au cours de l'alimentation des réservoirs 6B et 6C, l'égalité By=Cy doit être constamment maintenue.

Dans le cas de la figure 15, Ay>By>Cy. Ceci indique que le balourd maximum est situé entre les réservoirs 6A et 6B et qu'il est plus proche du réservoirs 6A que 6B. C'est donc les électrovannes correspondantes aux réservoirs 6B et 6C qui seront sollicitées. Lorsque Ay=By, le remplissage du réservoir 6B doit cesser. Le remplissage du réservoir 6C doit continuer tout en veillant à maintenir l'égalité Ay=By jusqu'à ce que Ay=By=Cy=0 (au Δy près correspondant à la tolérance d'équilibrage admissible).

Dans le cas de la figure 16, By=Cy>0 et Ay=0. Ceci indique que le balourd maximum est situé exactement entre les réservoirs 6B et 6C. C'est donc l'électrovanne correspondante au réservoir 6A qui est sollicitée jusqu'à ce que Ay=By=Cy=0 (au Δy près correspondant à la tolérance d'équilibrage admissible). Au cours de l'alimentation du réservoirs 6A, l'égalité By=Cy doit être constamment maintenue.

Le dispositif selon l'invention est particulièrement destiné à l'équilibrage des centrifugeuses ou des tambours de lave-linge dans la phase d'essorage du cycle de lavage. Ce dispositif, dans le dernier cas d'application, permet de faire des essorages à des vitesses élevées et de supprimer éventuellement les masses d'inertie qui équipent les lave-linge actuellement.

## Revendications

1. Dispositif pour l'équilibrage automatique et en cours de rotation d'un élément tournant de machine soumis à un balourd tel qu'un rotor, un tambour, ou une roue par exemple du type comprenant des réservoirs implantés sur l'élément tournant à équilibrer et recevant un fluide tel que de l'eau par l'intermédiaire d'un circuit hydraulique et dont la masse de ce fluide injecté dans le ou les réservoirs fait office de contrepoids d'équilibrage, **caractérisé en ce qu'**il comporte une suspension élastique (3) répartie autour des extrémités d'une cage de support (2) de l'élément tournant (5) au niveau des paliers de telle sorte qu'en cours de rotation, l'axe du dit élément tournant soumis au balourd, décrit un cercle C2 dont le centre O1 passe par l'axe du dit élément tournant lorsqu'il est en équilibre en cours de rotation, des butées (4) de positionnement axial de la cage (2) par rapport au support de machine (1) et solidaires de ce dit support de machine, au moins trois réservoirs (6) implantés à égale position angulaire l'un de l'autre sur le dit élément tournant, éloignés de l'axe de rotation et munis chacun d'au moins un becs de remplissage/vidange (7) situé à une de leurs extrémités et issu de leur partie la plus basse lorsque ces réservoirs sont en position haute, d'au moins un reniflard (8) issu de la partie la plus haute de ces réservoirs lorsqu'ils sont en position haute, et les dits becs de remplissage/vidange et reniflards sont courbés vers le centre de rotation de l'élément tournant (5), un corps de support (9) solidaire de l'arbre du dit élément tournant par une extrémité, un joint tournant (13) d'amenée du fluide d'équilibrage solidaire du dit corps de support par sa face avant et dans son axe de rotation, une tuyauterie (14) d'amenée du fluide d'équilibrage connectée au joint tournant (13) et une canalisation de refoulement (12) pour chaque vanne ou électrovanne, traversant l'arbre de l'élément tournant (5) au niveau du palier pour alimenter le réservoir du dit élément tournant, qui lui est dédié.

2. Dispositif selon la revendication 1, **caractérisé en ce que** le corps de support (9) comporte d'une part, une vanne (10) pour chaque réservoir (6) de l'élément tournant (5), et les tiges de commande (18) de ces vannes, sortent par la face avant du dit corps de support à égale position angulaire l'une par rapport à l'autre, décalées chacune en avant du sens de rotation ω d'un angle α par rapport à la position du réservoir (6) leur correspondant sur l'élément tournant (5), le déplacement de ces dites tiges de commande par rapport au dit corps de support est parallèle à l'axe de rotation de l'élément tournant (5) et leurs extrémités évoluent sur un même cercle dont le centre est situé sur l'axe de rotation de l'élément tournant (5) lorsqu'il est en équilibre, et d'autre part, il comporte une butée circulaire (15) solidaire du support de machine (1) dont l'axe est positionné dans l'alignement de l'axe de l'arbre de l'élément tournant (5) lorsqu'il est en équilibre ou à l'arrêt, et cette butée présente à sa partie centrale un large trou de passage de la tuyauterie (14) d'amenée du fluide d'équilibrage ainsi qu'un bossage également circulaire de même axe que la butée, situé sur la face en vis à vis des extrémités de tiges de commande (18), de telle sorte que la ou les extrémités des dites tiges de commande opposées au balourd, prennent appui sur ce bossage pour solliciter l'ouverture de la, ou des vannes, correspondantes à ces extrémités de tiges de commande (18) pour le remplissage du ou des réservoirs opposés au balourd, dès que l'élément tournant se trouve en déséquilibre.

3. Dispositif selon la revendication 1, **caractérisé en ce que** le corps de support (9) comporte d'une part, une vanne (10) pour chaque réservoir (6) de l'élément tournant (5) qui sont en nombre pair, et les tiges de commande (18) de ces vannes situées à égale position angulaire l'une par rapport à l'autre sur le dit corps de support et décalées chacune en avant du sens de rotation ω d'un angle α par rapport à la position du réservoir (6) leur correspondant sur l'élément tournant (5), ont un axe de déplacement par rapport au dit corps de support, perpendiculaire à l'axe de rotation de l'élément tournant (5) et les extrémités de ces dites tiges de commande de vannes, évoluent sur un même cercle dont le centre est situé sur l'axe de rotation de l'élément tournant (5) lorsqu'il est en équilibre, et d'autre part, il comporte une butée cylindrique (19) solidaire du support de machine (1), dont l'axe est positionné dans l'alignement de l'axe de l'arbre du dit élément tournant lorsqu'il est en équilibre ou à l'arrêt, de telle sorte qu'aucune extrémité des dites tiges de commande de vannes qui évoluent à l'intérieur de cette butée cylindrique (19), ne prend appui sur cette butée, mais qu'une ou plusieurs extrémités des dites tiges de commande de vannes situées du côté du balourd, prennent appui sur cette butée pour solliciter l'ouverture de la ou des vannes correspondantes à ces dites extrémités de tiges pour le remplissage du ou des réservoirs en opposition au balourd, dès que l'élément tournant se trouve en déséquilibre.

4. Dispositif selon la revendication 1, **caractérisé en ce que** le corps de support (9) comporte d'une part, une électrovannes (20) pour chaque réservoir (6) de l'élément tournant (5), et les contacts ressorts (21) de commande de ces électrovannes reliés chacun à une borne de l'électrovanne leur correspondant par un fil électrique, sont situées sur la face avant du dit corps de support à égale position angulaire l'un par rapport à l'autre, décalés chacun en avant du sens de rotation ω d'un angle α par rapport à la position du réservoir (6) leur correspondant sur l'élément tournant (5), l'axe de déplacement de ces dits contacts ressorts par rapport au dit corps de support est parallèle à l'axe de rotation de l'élément tournant (5) et leurs extrémités évoluent sur un même cercle dont le centre est situé sur l'axe de rotation de l'élément tournant (5) lorsqu'il est en équilibre, une alimentation électrique unipolaire tournante (24) centrée sur l'axe du dit corps de support à sa partie arrière et reliée à l'autre borne de chacune des électrovannes (20) par des fils électriques, et d'autre part, il comporte une butée circulaire plane (22) en matériau non conducteur d'électricité solidaire du support de machine (1) et dont l'axe de cette butée est positionné dans l'alignement de l'axe de l'arbre du dit élément tournant (5) lorsqu'il est en équilibre ou à l'arrêt, cette butée (22) présente en son centre un large trou de passage de la tuyauterie (14) d'amenée du fluide d'équilibrage et une surface circulaire conductrice d'électricité centrée sur cette butée (22) en vis à vis des contacts ressort (21) de commande des électrovannes (20) et connectée à l'autre pôle d'alimentation électrique par l'intermédiaire de la borne (23), et le diamètre extérieur de cette couche conductrice d'électricité est légèrement inférieur à celui du plus petit cercle C3 décrit par les dits contacts ressort en cours de rotation lorsque l'élément tournant (5) est en équilibre, de telle sorte que la ou les extrémités des dits contacts ressort opposés au balourd, touchent cette couche conductrice d'électricité pour commander l'ouverture de la ou des électrovannes leur correspondant, pour le remplissage du ou des réservoirs opposés au balourd, dès que l'élément tournant se trouve en déséquilibre.

5. Dispositif selon la revendication 1, **caractérisé** en ce què le corps de support (9) comporte d'une part, une électrovannes (20) pour chaque réservoir (6) de l'élément tournant (5) qui sont en nombre pair, et les contacts ressorts (21) de commande de ces électrovannes, reliés chacun à une borne de l'électrovanne leur correspondant par un fil électrique, sont situées à égale position angulaire l'un par rapport à l'autre sur le dit corps de support et décalées chacun en avant du sens de rotation ω d'un angle α par rapport à la position du réservoir (6) leur correspondant sur l'élément tournant (5), et ont un axe de déplacement par rapport au dit corps de support, perpendiculaire à l'axe de rotation de l'élément tournant (5) et les extrémités de ces dits contacts ressorts, évoluent sur un même cercle dont le centre est situé sur l'axe de rotation de l'élément tournant (5) lorsqu'il est en équilibre, une alimentation électrique unipolaire tournante centrée sur l'axe du dit corps de support à sa partie arrière et reliée à l'autre borne de chacune des électrovannes (20) par des fils électriques, et d'autre part, il comporte une butée cylindrique non conductrice d'électricité solidaire du support de machine (1) présentant sur sa périphérie interne une couche conductrice d'électricité isolée du corps de machine (1) et connectée à l'autre pôle d'alimentation électrique par l'intermédiaire d'une borne, et dont l'axe de cette butée est positionné dans l'alignement de l'axe de l'élément tournant (5) lorsqu'il est en équilibre ou à l'arrêt, de telle sorte qu'aucune extrémité des dits contacts ressort de commande des électrovannes qui évoluent à l'intérieur de cette butée cylindrique, ne prend appui sur la couche conductrice d'électricité, mais qu'une ou plusieurs extrémités des dits contacts ressort situées du côté du balourd, prennent appui sur cette couche conductrice d'électricité pour solliciter l'ouverture de la ou des électrovannes correspondantes à ces dits contacts ressort, pour le remplissage du ou des réservoirs en opposition au balourd, dès que l'élément tournant se trouve en déséquilibre.

6. Dispositif selon la revendications 1, **caractérisé en ce que** le corps de support (9) comporte autant d'électrovannes et de masselottes qu'il y a de réservoirs (6) sur l'élément tournant (5), ces masselottes identiques entre elles, sont implantées à égale position angulaire l'une par rapport à l'autre et décalées chacune en avant du sens de rotation ω d'un angle α par rapport à la position de chaque réservoir (6) leur correspondant sur l'élément tournant (5) et sont en contact sur des capteurs de force de telle sorte que leurs points d'appui sur ces capteurs évoluent sur un même cercle dont le centre est situé sur l'axe de rotation de l'élément tournant (5) lorsqu'il est en équilibre, et que ces capteurs mesurent les forces centrifuges générées par chacune des masselottes en cours de rotation qui sont égales entre elles lorsque l'élément tournant (5) est en équilibre, une alimentation électrique tournante centrée sur l'axe du dit corps de support à sa partie arrière, un circuit électronique comportant notamment un relais de commande pour chaque électrovanne (20) et un microprocesseur, et ce circuit électronique est tel que d'une part, il compare en permanence et durant toute la séquence d'équilibrage, les mesures transmises par ces capteurs en cours de rotation, et si ces mesures sont toutes égales entre elles, la séquence d'équilibrage prend fin car l'élément tournant (5) se trouve en équilibre, mais si ces mesures sont toutes ou partiellement différentes, il sélectionne la ou les mesures les plus élevées et égales entre elles comme mesure de référence à cet instant, et sollicite tous les relais de commande de remplissage des réservoirs (6) correspondants aux capteurs ayant des mesures inférieures à cette mesure de référence, transmise par le ou les capteurs dont seul le remplissage du réservoir leur correspondant n'est pas sollicité, et d'autre part, de commander l'arrêt du remplissage d'un réservoir dès que la mesure transmise par le capteur correspondant à ce réservoir devient égale à la dite mesure de référence à cet instant donné, la valeur de la dite mesure de référence peut être différente de celle du départ et notamment inférieure et le ou les capteurs correspondants à cette mesure de référence, peuvent être différents de celui ou de ceux de départ si la direction du balourd a changé en cours de rotation, l'arrêt du remplissage du dernier réservoir a lieu lorsque toutes les mesures transmises par tous les capteurs de force sont égales entre elles, ce qui correspond à un état d'équilibre du dit élément tournant.

7. Dispositif selon les revendications 1 et 6, **caractérisé en ce que** les masselottes sont maintenues en légère pression sur leur capteur de force par l'intermédiaire d'un ressort et ces masselottes sont noyées dans un milieu visqueux de telle sorte que leur poids soit neutralisé et permettre la mise à zéro par le circuit électronique, des mesures transmises par les capteurs de force au début de la séquence d'équilibrage et avant le démarrage de l'élément tournant à équilibrer.

8. Dispositif selon les revendications 1, 4, et 5, **caractérisé en ce qu'**il comporte un système de commande des électrovannes sans contact mécanique tel que des cellules photoélectriques, des rayons infrarouges, des ultrasons ou des rayons dits laser par exemple, dont une partie mobile est solidaire du corps de support (9) et une partie fixe est solidaire du support de machine (1).

9. Dispositif selon la revendication 1, **caractérisé en ce qu'**il comporte d'une part une couronne de repérage des réservoirs coopérant avec un capteur de position angulaire de ces réservoirs solidaire de la cage et d'autre part un capteur de force de telle sorte qu'en cours de rotation ces deux capteurs transmettent leurs mesures à un calculateur qui détermine par recoupage la direction et le sens du balourd par rapport aux réservoirs ainsi que la force générée par ce balourd, commande, dans le cas d'un dispositif à trois réservoirs, le remplissage des deux réservoirs opposés au balourd si le balourd est localisé exactement au niveau d'un réservoir et commande l'arrêt du remplissage des deux réservoirs lorsque la valeur de la force générée par le balourd devient nulle au Δy près correspondant à la tolérance d'équilibrage admissible, commande, dans le cas d'un dispositif à trois réservoirs, le remplissage des deux réservoirs les plus opposés au balourd lorsque le balourd est localisé entre deux réservoirs mais plus proche de l'un des réservoirs que l'autre et commande en premier lieu l'arrêt du remplissage du réservoir le moins opposé au balourd lorsque le balourd se trouve centré entre les deux réservoirs puis commande l'arrêt du remplissage du deuxième réservoir qui se trouve alors directement opposé au balourd, lorsque la force générée par le balourd devient nulle au Δy près correspondant à la tolérance d'équilibrage admissible, commande, dans le cas d'un dispositif à trois réservoirs, le remplissage du réservoir directement opposé au balourd lorsque le balourd est localisé exactement entre deux réservoirs et commande l'arrêt du remplissage de ce réservoir lorsque la force générée par le balourd devient nulle au Δy près correspondant à la tolérance d'équilibrage admissible, ce qui correspond à la deuxième phase du cas précédent, le dispositif intègre dans son mode de fonctionnement et avant le début de l'équilibrage, une correction angulaire d'un angle α correspondante au décalage angulaire qui existe entre la position réelle du balourd dans le tambour (5) par rapport à sa position apparente qui se trouve en avant dans le sens de rotation suivant la direction xx', ce décalage angulaire étant fonction de la résultante R, l'angle α étant variable dans un système où les efforts F1 et F2 sont variables, dans un tel système où l'amplitude du balourd et/ou sa vitesse de rotation sont variables, le calculateur du dispositif intègre dans son mode de fonctionnement une correction angulaire également variable correspondante aux variations de l'angle α.

## Patentansprüche

1. Vorrichtung für das automatische Auswuchten eines Maschinen-Drehelements, das sich in Drehbewegung befindet und einer Unwucht untersetzt wurde, wie einem Rotor, einer Trommel, oder einem Rad, welche zum Beispiel auf dem auszuwuchtenden Drehelement eingebaute Behälter umfasst und über einen Hydraulikkreis ein Fluidum aufnimmt, wie zum Beispiel Wasser, und wobei die in den oder in die Behälter eingespritzte Masse dieses Fluidums als Gegengewicht für die Auswuchtung wirkt, **dadurch gekennzeichnet, dass** dieses eine Elastikaufhängung (3) beinhaltet, die rund um die Enden eines Trägerkäfigs (2) des Drehelements (5) auf der Höhe des Lagers verteilt ist, so dass die Achse des genannten einer Unwucht untersetzten Drehelements In Drehbewegung einen Kreis C2 zieht, wobei der Mittelpunkt 01 durch die Achse des genannten Drehelements läuft, wenn sie sich bei einer Drehbewegung im Gleichgewicht hält, so sind axiale Positionieranschläge (4) des Käfigs (2) zum Maschinenlager (1) hin gerichtet und mindestens drei Behälter (6), die in gleicher Winkelposition auf dem Drehelement, abgewandt von der Rotationsachse eingebaut sind, sind mit diesem Maschinenlager verbunden, sowie versehen jeweils mit mindestens einem Einfüll- und Entleerungs-Schnabel (7), der sich an einem ihrer Enden und am Vorsprung ihres niedrigsten Teils befindet, wenn sich diese Behälter auf einer hohen Ebene befinden, von mindestens einem Schnüffelventil (8) das vom höchsten Teil dieser Behälter ausgeht, wenn diese sich in einer hohen Position befinden, und die besagten Einfüll-/Entleerungs-Schnäbel und Schnüffelventile sind zum Rotationsmittelpunkt des Drehelements (5) hin gebogen; ein Trägerkörper (9), der an einem Ende mit der Welle des genanntenen Drehlements verbunden ist, eine das Fluidum für die Auswuchtung leitende Umlaufdichtung (13), die mit dem Trägerkörper über ihre Seite vor und innerhalb ihrer Rotationsachse verbunden ist, sowie ein Rohrsystem (14) für den Durchfluss des Fluidums für die Auswuchtung ist an die Umlaufdichtung angeschlossen (13) und eine Rücksaugleitung (12) für jedes Ventil oder jedes Magnetventil, die durch die Welle des Drehelements (5) führen, auf der Ebene des Lagergehäuses, zur Versorgung des Behälters des diesem zugemessenen Drehelements.

2. Vorrichtung nach Anspruch 1, **dadurch gekennzeichnet, dass** der Trägerkörper (9) einerseits ein Ventil (10) für jeden Behälter (6) des Drehelements (5) enthält, und die Schaltwellen (18) dieses Ventils treten aus der Vorderseite des genannten Trägerkörpers auf der gleichen Winkelposition im Verhältnis zur anderen heraus, je nach vorne in Drehrichtung ω eines Winkels α versetzt zur Position des Behälters (6) die dieser auf dem Drehelement (5) entspricht, die Verschiebung der besagten Schaltwellen zum genannten Trägerkörper verläuft parallel zur Rotationsachse des Drehelements (5) und deren Enden verlaufen auf einem und demselben Kreis, worin sich der Mittelpunkt auf der Rotationsachse des Drehelements (5) befindet, wenn dieses im Gleichgewicht ist, und andererseits enthält sie einen kreisförmigen Anschlag (15) zum Maschinenlager (1) hin, dessen Achse in der Ausrichtung der Achse der Welle des Drehelements positioniert ist (5), wenn dieses im Gleichgewicht oder abgestellt ist, und dieser Anschlag zeigt an seinen zentralen Teil eine breite Durchgangsbohrung des Rohrsystems (14) der Leitung des Fluidums für die Auswuchtung sowie eine ebenfalls kreisförmige Ausbeulung der gleichen Achse wie der Anschlag, auf der gegenüberliegenden Seite der Enden der Schaltwellen (18), so dass das Ende oder die Enden der genannten Schaltwellen, die der Unwucht gegenüberliegen, sich auf dieser Ausbeulung aufstützen, um die Öffnung des Ventils oder der ihrer Schaltwellenenden entsprechenden Ventile (18) zu bewerkstelligen, zur Füllung des Behälters oder der Behälter, die sich der Unwucht gegenüber befinden, sobald das Drehelement unausgeglichen ist.

3. Vorrichtung nach Anspruch 1, **dadurch gekennzeichnet, dass** der Trägerkörper (9) einerseits je ein Ventil (10) für jeden Behälter (6) des Drehelements (5), die in einer geraden Zahl bestehen, enthält, und die Schaltwellen (18) dieser Ventile, die sich auf besagtem Trägerkörper auf gleicher Winkel-Position im Verhältnis zur anderen befinden und zwar jeweils nach vorne hin in Drehrichtung ω eines Winkels α, versetzt im Verhältnis zur Position des Behälters (6), der diesem Ventil entspricht, auf dem Drehelement (5), haben eine Verschiebungsachse zum Trägerkörper hin, senkrecht zur Rotatlonsachse des Drehelements (5), und die Enden der genannten Schaltwellen dieses Ventils verlaufen auf einem und demselben Kreis, dessen Mittelpunkt sich auf der Rotationsachse des Drehelements (5) befindet, wenn sich dieses im Gleichgewicht befindet, und andererseits hat es einen zylindrischen Anschlag (19), der mit dem Maschinenlager (1) verbunden ist, dessen Achse in der Achsenausrichtung der Welle des genannten Drehelements positioniert ist, wenn es im Gleichgewicht oder abgestellt ist, so dass kein Ende der genannten Schaltwellen der Ventile, die innerhalb dieses zylindrischen Anschlags (19) verlaufen, sich auf diesem Anschlag abstutzt, sich doch aber eines oder mehrere Enden der besagten Schaltwellen der auf der Seite der Unwucht liegenden Ventile auf diesem Anschlag abstützen, um die Öffnung des Ventils oder der Ventile zu veranlassen, die diesen Schatwellenenden entsprechen, zur Füllung des Behälters oder der Behälter, die der Unwucht gegenüberliegen, sobald sich das Drehelement im Ungleichgewicht befindet.

4. Vorrichtung nach Anspruch 1, **dadurch gekennzeichnet, dass** der Trägerkörper (9) einerseits je ein Magnetventil (20) für jeden Behälter (6) des Drehelements (5) enthält, sowie die Schaltkontaktfedern (21) dieser Magnetventile, die über einen elektrischen Draht je mit einer diesen entsprechenden Klemme verbunden sind, befinden sich auf der vorderen Seite des genannten Trägerkörpers auf einer verhältnismässig gleichen Winkelposition, und zwar je nach vorne hin versetzt in Drehrichtung ω eines Winkels α zur Position des Behälters (6) hin, die ihm entspricht auf dem Drehelement (5); die Verschiebungsachse dieser genannten Kontaktfedern im Verhältnis zu besagtem Trägerkörper liegt parallel zur Rotationsachse des Drehelements (5) und dessen Enden verlaufen auf einem und demselben Kreis, dessen Mittelpunkt sich auf der Rotationsachse des Drehelements (5) befindet, wenn es im Gleichgewicht ist; sowie eine elektrische einpolige Umlauf-Versorgung (24) enthaltend, die zentral auf dem hinteren Teil der Rotationsachse des genannten Trägerkörpers liegt und verbunden ist durch elektrische Drähte mit der anderen Klemme von jedem Magnetventil (20), und andererseits enthält er einen ebenen kreisförmigen Anschlag (22) aus nicht leitendem Material, verbunden mit dem Maschinenlager (1), und wo die Achse dieses Anschlags in der Achsenausrichtung der Welle des genanntenen Drehelements (5) positioniert ist, wenn es im Gleichgewicht oder abgestellt ist; dieser Anschlag (22) zeigt in seinem Mittelpunkt eine breite Durchgangsbohrung von dem Rohrsystem (14), das das Fluidum für die Auswuchtung leitet und eine kreisförmige stromleitende Oberfläche, die auf diesem Anschlag (22) zentriert ist und sich gegenüber der Kontaktfeder (21) befindet, zur Steuerung des Magnetventils (20), und über eine Klemme (23) an den anderen Pol der elektrischen Versorgung angeschlossen ist, und der Aussendurchmesser dieser elektrisch leitenden Schicht ist etwas knapper als der des kleinsten Kreises C3 der besagten Federkontakte, die sich in Drehbewegung befinden, wenn das Drehelement (5) im Gleichgewicht ist, so dass das Ende oder die Enden der Kontaktfedern der Unwucht gegenüber liegen und die elektrisch leitende Schicht berühren, um die Öffnung von diesem oder von diesen entsprechenden Magnetventilen zu bewirken, zur Füllung des Behälters oder der Behälter, die der Unwucht gegenüber liegen, sobald sich das Drehelement im Ungleichgewicht befindet.

5. Vorrichtung nach Anspruch 1, **dadurch gekennzeichnet, dass** der Trägerkörper (9) einerseits je ein Magnetventil (20) pro Behälter (6) des Drehelements (5) enthält, die in gerader Zahl vorhanden sind, und die Kontaktfedern (21) zur Steuerung dieser Magnetventile, die je mit einer Klemme des entsprechenden Magnetventils über einen elektrischen Draht verbunden sind, liegen in einer gleichen Winkelposition im Verhältnis zur anderen auf besagtem Trägerkörper, und zwar je nach vorne in Drehrichtung ω von einem Winkel α hin, versetzt im Verhältnis zur entsprechenden Position des Behälters (6) auf dem Drehelement (5), und haben eine Verschiebungsachse zum genannten Trägerkörper hin, senkrecht zur Rotationsachse des Drehelements (5) liegend, und die Enden der Kontaktfedern verlaufen auf ein und demselben Kreis, dessen Mittelpunkt auf der Rotationsachse des Drehelements (5) liegt, wenn dieses im Gleichgewicht ist; eine elektrische einpolige Umlauf-Stromversorgung, die auf dem hinteren Teil der Rotationsachse des besagten Trägerkörpers zentriert ist und mit der anderen Klemme von jedem Magnetventil (20) über elektrische Drähte verbunden sind, und andererseits enthält er einen nicht elektrisch leitenden zylindrischen Anschlag, der mit dem Maschinenlager (1) verbunden ist, und der auf seiner inneren Peripherie eine isolierte elektrisch leitende Schicht des Maschinenkörpers (1) aufweist und das andere elektrische Einspeisepol ist über eine Klemme angeschlossen, und wo die Achse von diesem Anschlag in der Ausrichtung der Achse des Drehelements (5) positioniert ist, wenn dieses sich im Gleichgewicht oder abgestellt befindet, so dass sich kein Ende der genannten Steuer-Kontakterfedern der Magnetventile, die im Innern dieses zylindrischen Anschlags verlaufen, auf der elektrisch leitenden Schicht aufstützt, doch aber ein oder mehrere Enden der genannten Kontaktfedern, die auf der Seite der Unwucht liegen, sich auf dieser elektrisch leitenden Schicht aufstützen, um die Öffnung von dem Magnetventil oder von den entsprechenden Magnetventilen zu bewirken, zur Füllung des Behälters oder der Behälter, die sich gegenüber der Unwucht befinden, sobald sich das Drehelement im Ungleichgewicht befindet.

6. Vorrichtung gemäß dem Patentanspruch 1, **dadurch gekennzeichnet, dass** der Trägerkörper (9) soviele Magnetventile als auch Fliehgewichte beinhalten, wie Behälter (6) auf dem Drehelement (5) vorhanden sind, diese identischen Fliehgewichte untereinander sind auf einer gleichen Winkelposition zueinander eingesetzt, und zwar je nach vorne versetzt in Drehrichtung ω von einem Winkel α zur Position der Behälter (6) hin, die jenen auf dem Drehelement (5) entsprechen, und stehen in Kontakt auf den Kraftsensoren, so dass ihre Stützpunkte auf diesen Sensoren auf einem und denselben Kreis verlaufen, wobei sich der Mittelpunkt auf der Rotationsachse des Drehelements (5) befinet, wenn dieses im Gleichgewicht ist, und dass diese Sensoren die Fliehkräfte messen, die von jedem der Fliehgewichte im Drehbewegung erzeugt werden, die untereinander gleich sind, wenn das Drehelement (5) im Gleichgewicht ist, wobei eine elektrische Umlaufversorgung, die auf der Achse des hinteren Teils des genanntenen Trägerkörpers zentriert ist; eine elektronische Schaltung, die vorteilhaft mit einem Steuerrelais für jedes Magnetventil (20) und mit einem Mikroprozessor versehen ist, und diese elektronische Schaltung ist so ausgelegt, dass sie einerseits stets und während der gesamten Auswuchtungssequenz die Messungen vergleicht, die von diesen Sensoren im Drehbewegung übertragen werden, und wenn diese Messungen alle gleich sind, so nimmt die Auswuchtungsfolge ein Ende, da sich das Drehelement (5) im Gleichgewicht befindet, wenn aber alle diese Messungen oder nur ein Teil davon verschieden ist, so wählt sie darunter den höchsten oder die höchsten und gleichen Messwerte aus als Bezugsmessung in diesem Augenblick, und beansprucht somit alle Schattrelais für die Füllung der Behälter (6), die den Sensoren entsprechen, die niedrigere Messwerte haben als dieser Bezugsmesswert, der von dem oder den Sensoren übertragen wurde, wobei nur die Füllung des diesen Sensoren entsprechenden Behälters nicht beansprucht wird, und andererseits, wenn das Stoppen der Füllung von einem Behälter befohlen wird, sobald der vom Sensor übertragene Messwert, der diesem Behälter entspricht, dem genannten Bezugsmass an diesem gegebenen Augenblick gleich wird, so kann der Wert des genannten Bezugsmesswertes von der Ausgangsmessung abweichen und beachtlich unter diesem Messwert liegen und der/die diesem Bezugsmesswert entsprechenden Sensoren können davon abweichen oder von dem Ausgangsmesswert, wenn sich die Richtung der Unwucht im Drehbewegung geändert hat, so wird die Füllung des letzten Behälters gestoppt, wenn alle von den Kraftsensoren übertragenen Messwerte untereinander gleich sind, was dann einem Gleichgewichtszustand des genanntenen Drehelements entspricht.

7. Vorrichtung gemäß den Patentansprüchen 1 und 6, **dadurch gekennzeichnet, dass** die Fliehgewichte auf ihrem Kraftsensor unter leichtem Druck gehalten werden mittels einer Feder und diese Fliehgewichte sind in einem viskösen Umfeld eingebettet, so dass ihre Gewichte neutralisiert sind und durch die elektronische Schaltung zu Beginn der Auswuchtungsfolge und vor dem Starten des in Gleichgewicht zu bringenden Drehelements die Nullstellung der von den Kraftsensoren übertragenen Messwerte ermöglichen.

8. Vorrichtung gemäß den Patentansprüchen 1, 4, und 5, **dadurch gekennzeichnet, dass** sie ein Schaltsystem der Magnetventile ohne mechanischen Kontakt, wie zum Beispiel fotoelektrische Zellen, Infrarotstrahlen, Ultraschall oder Strahlen, wie zum Beispiel Laserstrahlen, enthält, wobei ein beweglicher Teil mit dem Trägerkörper (9) und ein fester Teil mit dem Maschinenlager (1) verbunden ist.

9. Vorrichtung nach Anspruch 1, **dadurch gekennzeichnet, dass** sie einerseits eine Passkrone der Behälter enthält, die mit einem Winkelpositionssensor dieser mit dem Käfig verbundenen Behälter zusammenwirkt, und andererseits einen Kraftsensor, so dass diese beiden Sensoren in Drehbewegung ihre Messungen an einen Rechner übertragen, der durch Überschneidung die Richtung und die Orientierung der Unwucht im Verhältnis zu den Behältern bestimmt, sowie im Falle einer Vorrichtung mit drei Behältern steuert die von dieser Unwucht erzeugte Kraft die Füllung der zwei Behälter, die der Unwucht gegenüberliegen, wenn sich die Unwucht genau auf der Ebene von einem Behälter befindet und bewirkt das Stoppen der Füllung der zwei Behälter, wenn der Wert der von der Unwucht erzeugten Kraft Im Δ gleich Null wird und nahezu der zulässigen Auswuchtungstoleranz entspricht; und steuert im Falle einer Vorrichtung mit drei Behältern die Füllung der zwei Behälter, die der Unwucht mehr gegenüber liegen, wenn sich die Unwucht zwischen zwei Behältern befindet, doch aber einem der Behälter näher liegen als dem anderen, und an erster Stelle wird das Stoppen der Füllung jenes Behälters gesteuert, der der Unwucht weniger entgegengesetzt ist, wenn sich die Unwucht im Mittelpunkt zwischen den beiden Behältern befindet, da sie das Stoppen der Füllung des zweiten Behälters bewirkt, der sich direkt der Unwucht gegenüber befindet, wenn die von der Unwucht erzeugte Kraft gleich Null wird oder nahezu der zulässigen Auswuchtungstoleranz entspricht; und steuert im Falle einer Vorrichtung mit drei Behältern die Füllung des Behälters direkt gegenüber der Unwucht, wenn sich die Unwucht genau zwischen zwei Behältern befindet und das Stoppen der Füllung dieses Behälters bewirkt, wenn die von der Unwucht erzeugte Kraft im Δ gleich Null ist und nahezu der zulässigen Auswuchtungstoleranz entspricht, was der zweiten Phase des vorherigen Falls entspricht; die Vorrichtung integriert somit in ihrem Betriebsmodus und vor Beginn des Auswuchtens eine Winkelkorrektur eines Winkels α, der der Winkelverlagerung entspricht, die es zwischen der wirklichen Position der Unwucht in der Trommel (5) im Verhältnis zu ihrer scheinbaren Position gibt, die sich nach vorne hin in Drehbewegung in der der Richtung xx' folgenden Drehrichtung befindet, wobei diese Winkelverlagerung Funktion der daraus folgenden R-Verlagerung ist, wobei der Winkel α innerhalb eines Systems veränderlich ist oder die Kräfte F1 und F2 in einem solchen System veränderlich sind, wobei die Amplitude der Unwucht und/oder ihre Drehgeschwindigkeit veränderlich sind, so integriert der Rechner der Vorrichtung in seinem Betriebsmodus eine ebenfalls veränderliche Winkelkorrektur, die den Änderungen des Winkels α entspricht.

## Claims

1. Device for automatic balancing during rotation of a machine rotating element submitted to a balance such that a rotor, a drum, or a wheel for example of the type which has the containers inserted on the rotating element to balance and receive a fluid, such as water, through a hydraulic circuit and the mass of this fluid injected in the containers functions as balancing counterweights, **characterized in that** it includes an elastic suspension (3) distributed around the ends of the support cage (2) of the rotating element (5) at the level of the bearings in such a way that during rotation, the axis of said rotating element subjected to balancing, describes a circle C2 whose centre 01 passes through the axis of said rotating element when it is balanced during rotation, abutments (4) of axial positioning of the cage (2) in relation to the machine support (1) and attached to said machine support, - at least three containers (6) inserted into an equiangular position one from the other on said rotating element, separated from the rotating axis and each endowed with at least one filling/emptying beak (7) situated at one of their ends and emitted from their lowest part when these containers are in high position, of at least one vacuum valve (8) emitted from the highest part of these containers when they are in high position, and said filling/emptying beaks and vacuum valves are curved towards the rotation centre of the rotating element (5), a support body (9) attached to the shaft of said rotating element by an end, a rotating joint (13) for conducting the balancing fluid connected to said support body by its front face and in its rotating axis, piping (14) to conduct the balancing fluid connected to the rotating joint (13) and a discharge canalization (12) for each valve or electro-valve traversing the shaft of the rotating element (5) at the flat level to supply the container of said rotating element, for which it is dedicated.

2. Device according to claim 1, **characterized in that** the support body (9) includes on the one hand, a valve (10) for each container (6) of the rotating element (5), the control stems (18) of these valves exit from the front face of said equiangular position support body one compared to the other, each staggered before the rotating direction w of an angle in relation to the position of the container (6) corresponding on the rotating element (5), the displacement of said control stems in relation to said support body is parallel to the rotating axis of the rotating element (5) and their ends evolve on the same circle whose centre is situated on the rotating axis of the rotating element (5) when it is balanced, on the other hand, it includes a circular abutment (15) attached to the machine support (1) the axis of which is aligned with the axis of the shaft of the rotating element (5) when it is balanced or to the stop, and this abutment presents in its central part a large piping passage hole (14) to conduct the balancing fluid as well as bossings which are also circular and have the same axis as the abutment, situated on the face vis a vis the front ends of the control stems (18), in such a way that the ends of the said control stems opposed to the unbalance, are supported by the bossings to solicit the opening of one or more of the valves corresponding to these control stems ends (18) for the filling of one or more containers opposed to the unbalance, since the rotating element is unbalanced.

3. Device according to claim 1, **characterized in that** the support body (9) includes on one hand, a valve (10) for each container (6) of the rotating element (5) which are even in number, the control stems (18) of these valves are placed at an equiangular position compared to each other on the said support body and each is staggered before the rotating direction ω of an angle α in relation to the position of the container (6) and they correspond to the rotating element (5), they have a displacement axis in relation to the said support body, perpendicular to the rotating axis of the rotating element(5) and the ends of the said control stems of these valves evolve on the same circle whose centre is situated on the rotating axis of the rotating element (5) when it is balanced, on the other hand, it includes a cylindrical abutment (19) attached to the machine support (1), the axis of which is aligned with the axis of the shaft of the said rotating element when one is balanced or to the stop, in such a way that any end of the said valve control stems which evolve inside the cylindrical abutment (19) is not supported by this abutment, but that one or several ends of the said control stem valves placed sideways from unbalance are supported by this abutment to solicit the opening of one or more valves corresponding to these said stem ends to fill one or more of the containers opposed to the unbalance, since the rotating element is unbalanced.

4. Device according to claim 1, **characterized in that** the support body (9) includes on one hand, an electro-valve (20) for each container (6) of the rotating element (5), the contact control springs (21) of these electro-valves are each linked to an electro-valve terminal that corresponds to an electric wire and are placed on the face in front of the said support body at an equiangular position one in relation to the other, each staggered in advance of the rotating direction ω of an angle α in relation to the container position (6) corresponding to the rotating element (5), the displacement axis of the said contact springs in relation to the said support body is parallel to the rotating axis of the rotating element (5) and their ends evolve on a circle, the centre of which is placed on the rotating axis of the rotating element (5) when it is balanced, a rotating unipolar power supply (24) centred on the axis of the said support body on its back and connected to the other terminal of each electro-valve (20) by electric-conductor wires. On the other hand, it includes a circular flat abutment (22) made from electro-insulating materials connected to the machine support (1) and the axis of this abutment is positioned in line with the axis of the shaft of said rotating element (5) when it is balanced or to the stop, this abutment (22) has in its centre a large piping passage hole (14) that carries the balancing fluid and a centred circular surface that conducts electricity on this abutment (22) vis a vis contact springs (21) of electro-valve control (20) and connected to the other electric power-supply pole by means of the terminal (23), and the external diameter of this electricity conductor layer is slightly lower than that of the smaller circle C3 described by the said contact spring during rotation when the rotating element (5) is balanced, in such a way that one or more of the ends of the said contact springs opposed at the unbalance, touch this electricity conductor layer to control the opening of one or more of the corresponding electro-valves, to fill the containers opposed at the unbalance, when the rotating element is unbalanced.

5. Device according to claim 1, **characterized in that** the support body (9) includes on one hand, an electro-valve (20) for each container (6) of the rotating element (5) which are even in number, and the contact control spring (21) for the electro-valves, each connected to a terminal of the corresponding electro-valve by an electric wire, are placed at an equiangular position in relation to each other on the said support body and staggered each in advance of the rotating direction ω of an angle α in relation to the container position (6) corresponding to the rotating element (5), and they have a displacement axis in relation to the said support body, perpendicular to the rotating axis of the rotating element (5) and the ends of said contact spring evolve on a circle whose centre is placed on the rotating axis of the rotating element (5) when it Is balanced, a centred rotating unipolar power supply on the axis of the said support body on its back and connected to the other terminal of each electro-valve (20) by electric-conductor wires, on the other hand, it includes a cylindrical non-electric conductive abutment connected with the machine support (1) that has an electricity conductor layer on its internal periphery insulated from the machine body (1) and is connected to the other power supply pole through a terminal, the axis of this abutment is aligned with the rotating element axis (5) when it is balanced or stopped, in such a way that any terminal of the said control contact spring for the electro-valves which move inside this cylindrical abutment, is not supported by the electricity conductor layer, but that one or several ends of the said contact spring placed on the side of the unbalance, are supported by this electricity conductor layer to solicit the opening of one or more of the corresponding electro-valves to the said contact spring, to fill one or more of the containers opposed to the unbalance, since the rotating element is unbalanced.

6. Device according to claim 1, **characterized** inthat the support body (9) includes the same number of electro-valves and governor-weights as containers (6) on the rotating element (5), these identical governor-weights are planted to equiangular position in relation to each other and are staggered In advance of the rotating direction ω of an angle α in relation to the position of each container (6) corresponding on the rotating element (5) and are in contact with force sensors in such a way that their support points on these sensors evolve on a circle the centre of which is placed on the rotating axis of the rotating element (5) when it is balanced, and that these sensors measure the centrifugal forces generated by each governor-weight during rotation which are equal when the rotating element (5) is balanced, a centred rotating power supply on the axis of said support body on its back, an electronic circuit including especially a control relay for each electro-valve (20) and a microprocessor, and this electronic circuit is such that on one hand, it compares in permanence and during the whole balancing sequence, the transmitted data with these sensors during rotation, and if these measures are all equal, the balancing sequence ends because the rotating element (5)is balanced, but if these measures are all or partially different, It selects one or more of the highest and equal measures as a reference measure at this moment, and solicits all the relay control filling containers (6) corresponding to the sensors with measures lower than the reference measure, transmitted by one or more sensors whose corresponding filling containers control is not solicited, and on the other hand, to control the stop of the filling of a container when the measure transmitted by the sensor corresponding to this container becomes equal to the said reference measure at this given moment, the value of the said referred measure can be different to the starting measure and especially lower and one or various sensors corresponding to this referred measure, can be different to that or those at the start if the direction of the unbalance has changed during rotation, the filling stop of the last container takes place when all the measures transmitted by all the force sensors are equal, which corresponds to a balanced state of the said rotating element.

7. Device according to claims 1 and 6, **characterized in that** the governor weights are maintained at a low pressure on their force sensor by means of a spring andthese governor weights are drowned in a viscous medium in such a way that their weight is neutralized and allows the setting to zero by the electronic circuit, of the measures transmitted by force sensors at the start of the balancing sequence and before the start of the rotating element which is to be balanced.

8. Device according to claims 1, 4, and 5, **characterized in that** it includes an electro-valve control system without mechanical contact such as photoelectric cells, infrared rays, ultrasonic or laser rays, a mobile part of which is connected to the support body (9) and a fixed part is connected to the machine support (1).

9. Device according to claim 1, **characterized in that** it includes on one hand a container locating crown that cooperates with a sensor of an angular position on these containers connected to the cage and on the other hand a force sensor is implemented in such a way that during rotation these two sensors transmit their measures to a computer which by trimming determines the direction and the sense of the unbalance in reference to the containers as well as the force generated by this unbalance, control, in the case of a device with three containers, the filling of the two containers opposed at the unbalance if the unbalance is exactly located at the level of a container and controls the stop of the filling of the two containers when the value of the force generated by the unbalance becomes null at the Δy in close relation to the admissible balancing tolerance, control, in the case of a device with three containers, the filling of the two containers most opposed at the unbalance when the unbatance is located between two containers but closer to one of the containers than the other and controls in the first place the stop of the filling of the container less opposed at the unbalance when the unbalance is centred between the two containers then controls the stop of the filling of the second container which is then directly opposed at the unbalance, when the force generated by the unbalance becomes null at the Δy in close relation to the admissible balancing tolerance, control, in the case of a device with three containers, the filling of the container directly opposed at the unbalance when the unbalance is located exactly between two containers and controls the stop of the filling of this container when the force generated by the unbalance becomes null at the Δy in close relation to the admissible balancing tolerance, which corresponds to the second phase of the previous case, the device Integrates in its working mode and before the start of the balancing, an angular correction of an angle α corresponding to the angular separation which exists between the real position of the unbalance in the drum (5)in reference to its apparent position which is in advance of the rotating direction according to the direction xx', this angular separation function of the resultant R, the angle α is variable In a system where the forces F1 and F2 are variable, in such a system where the amplitude of the unbalance and/or its rotating speed are variable, the device computer integrates in its working mode an angular correction also variable corresponding to variations of the angle α.
